# EUROPÄISCHE PATENTSCHRIFT

(11) **EP 4 281 837 B1**
(45) Veröffentlichungstag und Bekanntmachung des Hinweises auf die Patenterteilung: **04.06.2025**
(21) Anmeldenummer: 21831015.9
(22) Anmeldetag: 07.12.2021
(51) Int. Cl.: G05D 1/00, G01S 17/931, B66F 9/06, B66F 9/075, G01S 17/42, G01S 17/86, G01S 17/87

(54) **FAHRERLOSES TRANSPORTFAHRZEUG UND VERFAHREN ZUM BETREIBEN EINES FAHRERLOSEN TRANSPORTFAHRZEUGS**
DRIVERLESS TRANSPORT VEHICLE AND METHOD FOR OPERATING A DRIVERLESS TRANSPORT VEHICLE
VÉHICULE DE TRANSPORT SANS CONDUCTEUR ET PROCÉDÉ DE FONCTIONNEMENT D'UN VÉHICULE DE TRANSPORT SANS CONDUCTEUR

(30) Priorität: 21.01.2021 DE 102021000298; 26.03.2021 DE 102021001597
(43) Veröffentlichungstag der Anmeldung: 29.11.2023
(73) Patentinhaber: SEW-EURODRIVE GmbH & Co. KG, 76646 Bruchsal (DE)
(72) Erfinder: SCHÖPFER, Claus, 69168 Wiesloch (DE); SCHIFFMANN, Sebastian, 76709 Kronau (DE); HAHN-WOERNLE, Paul, 70193 Stuttgart (DE); SIEBEL, Johannes, 67117 Limburgerhof (DE)
(86) Internationale Anmeldenummer: PCT/EP2021/084666
(87) Internationale Veröffentlichungsnummer: WO 2022/156952

(56) Entgegenhaltungen:
- DE-U1- 202019 106 154

## Beschreibung

Die Erfindung betrifft ein fahrerloses Transportfahrzeug zum Transport von Ladungsträgern, insbesondere Gestellen, welche von dem fahrerlosen Transportfahrzeug unterfahrbar sind, umfassend einen Rahmen, eine Hubeinrichtung zum Anheben eines unterfahrenen Ladungsträgers relativ zu dem Rahmen, und mindestens einen Laserscanner zur Erkennung von Hindernissen. Die Erfindung betrifft auch ein Verfahren zum Betreiben eines erfindungsgemäßen fahrerlosen Transportfahrzeugs.

In verschiedenen Anlagen, beispielsweise in Supermärkten, Industriehallen, Logistikzentren, Krankenhäusern und Produktionswerken, sind fahrerlose Transportfahrzeuge einsetzbar. Die fahrerlosen Transportfahrzeuge dienen beispielsweise zum Transport von Gegenständen, insbesondere von Ladungsträgern, innerhalb der jeweiligen Anlage. Die Ladungsträger dienen zur Aufnahme von den zu transportierenden Waren.

Ladungsträger sind beispielsweise Gestelle oder Paletten, welche eine oder mehrere Transportflächen zur Aufnahme von Waren aufweisen. Ein solcher Ladungsträger weist mehrere Tragelemente auf, welche unterhalb der Transportflächen angeordnet sind, und welche in Kontakt mit einem Boden sind, auf welchem der Ladungsträger steht. Solche Tragelemente sind beispielsweise feststehende Füße oder drehbare Rollen. Zur Aufnahme eines Ladungsträgers unterfährt ein fahrerloses Transportfahrzeug den Ladungsträger und hebt diesen an, so dass die besagten Tragelemente des Ladungsträgers den Kontakt zu dem Boden verlieren.

Die Laserscanner erfassen die Umgebung des fahrerlosen Transportfahrzeugs in einer Scanebene oberhalb des Bodens. Wird der Ladungsträger nur geringfügig angehoben, so ragen die Tragelemente in die Scanebene der Laserscanner hinein. Bereiche hinter den Tragelementen sind dann für die Laserscanner nicht sichtbar. Ein Anheben der Ladungsträger über die Scanebene dauert länger und bewirkt, dass der Schwerpunkt weiter nach oben verlagert wird. Transportfahrzeuge sollten möglichst flach sein, also eine möglichst geringe Höhe aufweisen. Hubeinrichtungen mit bei entsprechend geringer Eigenhöhe mit großem Hub sind aufwändig.

Aus dem Dokument DE 10 2019 001 253 A1 ist ein Verfahren zum Betreiben einer technischen Anlage bekannt, welche ein fahrerlose Transportfahrzeug aufweist, das auf einer Verkehrsfläche der technischen Anlage verfahrbar ist. Das fahrerlose Transportfahrzeug erfasst mit Hilfe von entsprechenden Sensoren Objekte in der technischen Anlage.

Aus der DE 20 2020 000 762 U1 ist ein fahrerloses Transportfahrzeug bekannt, welches mehrere 3D-Bildsensoren zur Erfassung von Überwachungsräumen aufweist.

Aus der DE 10 2019 001 125 A1 ist eine Fördereinrichtung zum Fördern von beladenen oder unbeladenen Ladungsträgern bekannt, welche aus einer ersten Fördereinheit und einer zweiten Fördereinheit besteht. Zur Erfassung eines Umfelds der Fördereinrichtung ist ein Sensorsystem vorgesehen.

Aus der DE 10 2015 010 718 A1 ist eine Fördereinrichtung zum Fördern von beladenen oder unbeladenen Ladungsträgern mit einer ersten Fördereinheit und einer zweiten Fördereinheit bekannt. Die Fördereinheiten weisen jeweils eine radargestützte Detektionseinrichtung auf.

Aus der DE 20 2019 106 154 U1 sind ein fahrerloses Transportsystem und eine Transportanordnung, welche ein fahrerloses Transportsystem umfasst, bekannt. Das fahrerlose Transportsystem weist eine zur Aufnahme von Lasten bestimmte Plattform und Sensoren zur Erfassung von Hindernissen auf.

Der Erfindung liegt die Aufgabe zugrunde, ein fahrerloses Transportfahrzeug zum Transport von Ladungsträgern, welche von dem fahrerlosen Transportfahrzeug unterfahrbar sind, sowie ein Verfahren zum Betreiben eines fahrerlosen Transportfahrzeugs weiterzubilden.

Die Aufgabe wird durch ein fahrerloses Transportfahrzeug mit den in Anspruch 1 angegebenen Merkmalen gelöst. Vorteilhafte Ausgestaltungen und Weiterbildungen sind Gegenstand der Unteransprüche. Die Aufgabe wird durch ein Verfahren zum Betreiben eines fahrerlosen Transportfahrzeugs mit den in Anspruch 13 angegebenen Merkmalen gelöst.

Ein erfindungsgemäßes fahrerloses Transportfahrzeug zum Transport von Ladungsträgern, insbesondere Gestellen, welche von dem fahrerlosen Transportfahrzeug unterfahrbar sind, umfasst einen Rahmen mit einem zumindest annähernd rechteckigen Querschnitt mit einer Frontseite, einer der Frontseite gegenüberliegenden Heckseite, einer rechten Längsseite und einer der rechten Längsseite gegenüberliegenden linken Längsseite, wobei die Frontseite und die Heckseite in eine Querrichtung verlaufen, und die Längsseiten in eine Längsrichtung verlaufen, eine Hubeinrichtung zum Anheben eines unterfahrenen Ladungsträgers relativ zu dem Rahmen und mindestens einen Laserscanner zur Erkennung von Hindernissen. Dabei ist ein erster Laserscanner an der Frontseite angeordnet, ein zweiter Laserscanner ist an der Heckseite angeordnet, ein dritter Laserscanner ist an der rechten Längsseite angeordnet, und ein vierter Laserscanner ist an der linken Längsseite angeordnet. Die Hubeinrichtung weist dabei eine Hubplatte zur Aufnahme des unterfahrenen Ladungsträgers auf, welche relativ zu dem Rahmen in eine Vertikalrichtung beweglich ist.

Wenn ein Tragelement eines unterfahrenen Ladungsträgers in die Scanebene eines Laserscanners hineinragt, so entsteht zwar ein Bereich hinter dem besagten Tragelement, welcher für den jeweiligen Laserscanner nicht sichtbar ist. Die Laserscanner sind jedoch derart angeordnet, dass in diesem Fall ein Bereich, der für einen Laserscanner nicht sichtbar ist, für mindestens einen anderen Laserscanner weitgehend sichtbar ist. Ein verdeckter Bereich, welcher für keinen der Laserscanner sichtbar ist, weist eine Form eines Dreiecks oder eine ähnliche Form auf. Der verdeckte Bereich weist eine verhältnismäßig geringe Ausdehnung auf, die durch Position und Größe der Tragelemente definiert ist. Es ist möglich den Flächeninhalt des verdeckten Bereichs so klein zu halten, dass Personen hinter dem Tragelement erkannt werden. Im Gegensatz dazu ist der Bereich bei klassischer Anordnung der Laserscanner offen und dehnt sich mit zunehmender Entfernung von einem Tragelement fächerförmig aus. Die Umgebung des fahrerlosen Transportfahrzeugs wird also durch die Laserscanner annähernd vollständig erfasst. Mit einem erfindungsgemäßen fahrerlosen Transportfahrzeug ist es möglich, den Ladungsträger zum Transport mit einem Kurzhub nur geringfügig anzuheben. Der Kurzhub ist in verhältnismäßig kurzer Zeit ausführbar, somit wird die zum Aufnehmen und Anheben des Ladungsträgers erforderliche Zeit verringert, und dadurch wird eine Prozesszeitoptimierung erreicht.

Erfindungsgemäß ist der dritte Laserscanner in einem zentralen Bereich der rechten Längsseite angeordnet. Erfindungsgemäß ist der vierte Laserscanner in einem zentralen Bereich der linken Längsseite angeordnet. Somit ergibt sich eine symmetrische Anordnung der Laserscanner in Bezug auf die Längsseiten.

Erfindungsgemäß werden alle vier Laserscanner für die Navigation des Transportfahrzeugs genutzt.

Gemäß einer bevorzugten Ausgestaltung der Erfindung sind die Laserscanner dazu ausgebildet, Hindernisse in einer jeweiligen Scanebene zu erkennen, wobei die Laserscanner derart an dem Rahmen angeordnet sind, dass die Scanebenen der Laserscanner parallel zu einem Boden ausgerichtet sind, auf welchem das fahrerlose Transportfahrzeug sich befindet. Dadurch sind alle wesentlichen Hindernisse in der Anlage erkennbar und Kollisionen mit den besagten Hindernissen sind vermeidbar. Ein Hindernis ist beispielsweise ein anderes fahrerloses Transportfahrzeug, eine Person oder ein sonstiges Objekt.

Gemäß einer bevorzugten Ausgestaltung der Erfindung sind die Laserscanner derart an dem Rahmen angeordnet, dass die Scanebenen der Laserscanner in einer Vertikalrichtung einen gleichen Abstand zu dem Boden aufweisen. Die Scanebenen der einzelnen Laserscanner fallen somit zu einer gemeinsamen Scanebene zusammen.

Gemäß einer vorteilhaften Weiterbildung der Erfindung besitzt der erste Laserscanner in der Scanebene ein erstes Sichtfeld, und der zweite Laserscanner besitzt in der Scanebene ein zweites Sichtfeld, und der dritte Laserscanner besitzt in der Scanebene ein drittes Sichtfeld, und der vierte Laserscanner besitzt in der Scanebene ein viertes Sichtfeld. Dabei erstrecken das erste Sichtfeld sowie das zweite Sichtfeld sich in der jeweiligen Scanebene über einen Winkelbereich von mindestens 200°, vorzugsweise von mindestens 230°. Somit erstrecken sich das erste Sichtfeld sowie das zweite Sichtfeld auch jeweils in Abschnitte seitlich von dem Transportfahrzeug.

Gemäß einer bevorzugten Weiterbildung der Erfindung sind die Laserscanner derart an dem Rahmen angeordnet, dass das erste Sichtfeld und das dritte Sichtfeld sich in einem Abschnitt überlappen, welcher in Längsrichtung teilweise zwischen der Frontseite und der Heckseite liegt, und/oder dass das erste Sichtfeld und das vierte Sichtfeld sich in einem Abschnitt überlappen, welcher in Längsrichtung teilweise zwischen der Frontseite und der Heckseite liegt, und/oder dass das zweite Sichtfeld und das dritte Sichtfeld sich in einem Abschnitt überlappen, welcher in Längsrichtung teilweise zwischen der Frontseite und der Heckseite liegt, und/oder dass das zweite Sichtfeld und das vierte Sichtfeld sich in einem Abschnitt überlappen, welcher in Längsrichtung teilweise zwischen der Frontseite und der Heckseite liegt. Dadurch weisen verdeckte Bereiche hinter Tragelementen verhältnismäßig geringe Ausdehnungen auf.

Gemäß einer bevorzugten Ausgestaltung der Erfindung sind die Längsseiten länger als die Frontseite und die Heckseite, insbesondere mindestens doppelt so lang. Ein Abstand zwischen der Frontseite und der Heckseite in Längsrichtung ist also größer als ein Abstand zwischen den Längsseiten in Querrichtung.

Gemäß einer vorteilhaften Ausgestaltung der Erfindung ist der erste Laserscanner in einem zentralen Bereich der Frontseite angeordnet. Gemäß einer vorteilhaften Ausgestaltung der Erfindung ist der zweite Laserscanner in einem zentralen Bereich der Heckseite angeordnet. Somit ergibt sich eine symmetrische Anordnung der Laserscanner in Bezug auf die Frontseite sowie die Heckseite. Vorteilhaft ist dabei der verdeckte Bereich hinter den Tragelementen eines unterfahrenen Ladungsträgers besonders klein. Bei der besagten Anordnung sollten alle vier Laserscanner für die Navigation genutzt werden, da der erste Laserscanner und der zweite Laserscanner die Längsseiten weniger abdecken.

Gemäß einer weiteren vorteilhaften Ausgestaltung der Erfindung ist der erste Laserscanner in einem Eckbereich der Frontseite und einer Längsseite angeordnet. Gemäß einer weiteren vorteilhaften Ausgestaltung der Erfindung ist der zweite Laserscanner in einem Eckbereich der Heckseite und einer Längsseite angeordnet. Durch diese Anordnung der Laserscanner ist eine verbesserte Navigation des fahrerlosen Transportfahrzeugs mithilfe der Laserscanner ermöglicht. Insbesondere ist eine Navigation ausschließlich über den ersten Laserscanner und den zweiten Laserscanner möglich, da deren zusammengesetztes Sichtfeld einen verhältnismäßig großen Bereich an den Längsseiten des Transportfahrzeugs abdeckt. Der dritte Laserscanner und der vierte Laserscanner können dann reine Sicherheitsscanner sein, die nicht für die Navigation genutzt werden.

Gemäß einer bevorzugten Weiterbildung der Erfindung weist die Hubeinrichtung eine Hubplatte zur Aufnahme eines unterfahrenen Ladungsträgers auf, welche relativ zu dem Rahmen in eine Vertikalrichtung beweglich ist, und welche eine Zentriervorrichtung zum Zentrieren eines unterfahrenen Ladungsträgers aufweist. Somit ist ein angehobener Ladungsträger formschlüssig auf dem fahrerlosen Transportfahrzeug gehalten und gegen Verrutschen gesichert. Somit sind Positioniertoleranzen eines unterfahrenen Ladungsträgers ausgleichbar, wodurch die Prozesssicherheit erhöht wird.

Gemäß einer vorteilhaften Weiterbildung der Erfindung umfasst das fahrerlose Transportfahrzeug eine Sicherheitssteuerung, welche dazu eingerichtet ist, eine Warnmeldung zu generieren, wenn mindestens ein Laserscanner ein Hindernis in einem Sichtfeld erkennt. Ein Hindernis ist beispielsweise ein anderes fahrerloses Transportfahrzeug, eine Person oder ein sonstiaes Obiekt. Bei Erkennung eines Hindernisses ist es denkbar dass die Sicherheitssteuerung neben dem Generieren der Warnmeldung weitere Aktionen durchführt, beispielsweise das fahrerlose Transportfahrzeug abbremst um eine Kollision zu verhindern.

Gemäß einer bevorzugten Ausgestaltung der Erfindung umfasst das fahrerlose Transportfahrzeug eine Antriebseinrichtung, einen elektrischen Energiespeicher zur Versorgung der Antriebseinrichtung sowie eine Steuereinheit zur Steuerung der Antriebseinrichtung. Die Antriebseinrichtung umfasst beispielsweise einen Elektromotor, ein Getriebe und Antriebsräder.

Gemäß einer weiteren vorteilhaften Ausgestaltung der Erfindung umfasst das fahrerlose Transportfahrzeug einen Positionssensor zur Erfassung einer Position des fahrerlosen Transportfahrzeugs. Bei dem besagten Sensor handelt es sich beispielsweis um einen GPS-Empfänger. Die Erfassung der Position des fahrerlosen Transportfahrzeugs ermöglicht eine einfache Lokalisierung des fahrerlosen Transportfahrzeugs. Zusätzlich ist eine Erfassung der Position des fahrerlosen Transportfahrzeugs mit Hilfe der Laserscanner und/oder mittels RFID denkbar.

Gemäß einem erfindungsgemäßen Verfahren zum Betreiben eines erfindungsgemäßen fahrerlosen Transportfahrzeugs wird ein zu transportierender Ladungsträger, insbesondere ein Gestell, von dem fahrerlosen Transportfahrzeug unterfahren, und der unterfahrene Ladungsträger wird von der Hubeinrichtung relativ zu dem Rahmen angehoben. Dann wird ein Transport des Ladungsträgers durchgeführt, während mindestens ein Tragelement des Ladungsträgers in eine Scanebene der Laserscanner hineinragt.

Durch das erfindungsgemäße Verfahren ist es ausreichend, den Ladungsträger zum Transport mit einem Kurzhub nur geringfügig anzuheben. Der Kurzhub wird in verhältnismäßig kurzer Zeit ausgeführt, und somit wird die zum Aufnehmen und Anheben des Ladungsträgers erforderliche Zeit verringert. Dadurch wird eine Prozesszeitoptimierung erreicht.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine semitransparente Draufsicht auf ein fahrerloses Transportfahrzeug gemäß einer ersten Ausführungsform mit einem Ladungsträger,
- Figur 2:: eine weitere semitransparente Draufsicht auf ein fahrerloses Transportfahrzeug gemäß der ersten Ausführungsform mit einem Ladungsträger,
- Figur 3:: eine semitransparente Draufsicht auf ein fahrerloses Transportfahrzeug gemäß einer zweiten Ausführungsform mit einem Ladungsträger und
- Figur 4:: eine perspektivische Darstellung eines fahrerlosen Transportfahrzeugs gemäß der zweiten Ausführungsform mit einem Ladungsträger.

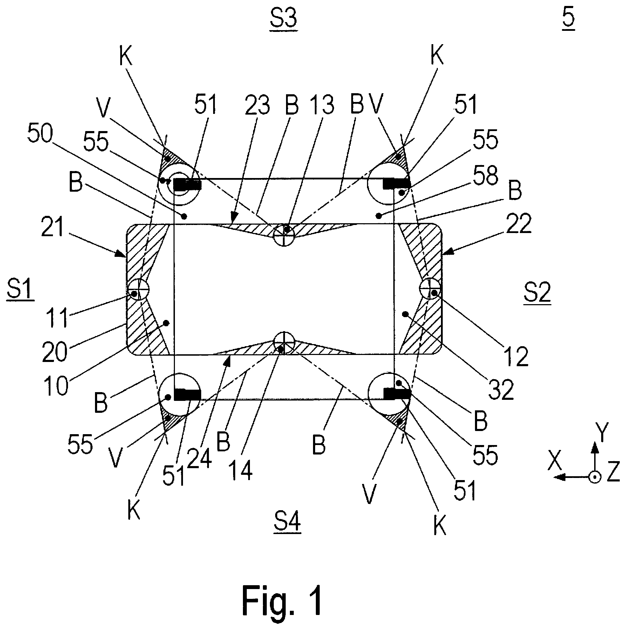

Figur 1 zeigt eine semitransparente Draufsicht auf ein fahrerloses Transportfahrzeug 10 gemäß einer ersten Ausführungsform mit einem Ladungsträger 50. Das fahrerlose Transportfahrzeug 10 befindet sich auf einem ebenen Boden 5, welcher sich rechtwinklig zu einer Vertikalrichtung Z erstreckt. Eine Querrichtung Y erstreckt sich rechtwinklig zu der Vertikalrichtung Z. Eine Längsrichtung X erstreckt sich rechtwinklig zu der Vertikalrichtung Z und rechtwinklig zu der Querrichtung Y.

Das fahrerlose Transportfahrzeug 10 umfasst einen Rahmen 20 mit einem annähernd rechteckigen Querschnitt. Der Rahmen 20 weist eine Frontseite 21, einer der Frontseite 21 gegenüberliegende Heckseite 22, eine rechte Längsseite 23 und eine der rechten Längsseite 23 gegenüberliegende linke Längsseite 24 auf. Die Frontseite 21 und die Heckseite 22 verlaufen in Querrichtung Y, die Längsseiten 23, 24 verlaufen in Längsrichtung X. Die Längsseiten 23, 24 sind dabei länger als die Frontseite 21 und die Heckseite 22, beispielsweise 1,5-mal so lang, doppelt so lang, 2,5-mal so lang oder dreimal so lang.

Das fahrerlose Transportfahrzeug 10 umfasst einen ersten Laserscanner 11, der in einem zentralen Bereich der Frontseite 21 angeordnet ist. Das fahrerlose Transportfahrzeug 10 umfasst einen zweiten Laserscanner 12, der in einem zentralen Bereich der Heckseite 22 angeordnet ist. Das fahrerlose Transportfahrzeug 10 umfasst einen dritten Laserscanner 13, der in einem zentralen Bereich der rechten Längsseite 23 angeordnet ist. Das fahrerlose Transportfahrzeug 10 umfasst einen vierten Laserscanner 14, der in einem zentralen Bereich der linken Längsseite 24 angeordnet ist. Dabei werden alle vier Laserscanner 11, 12, 13, 14 für die Navigation des Transportfahrzeugs 10 genutzt.

Die Laserscanner 11, 12, 13, 14 senden jeweils einen Laserstrahl in einer Scanebene aus, detektieren einen reflektierten Laserstrahl und berechnen daraus eine Entfernung zu einem Objekt, das den jeweiligen Laserstrahl reflektiert. Die Laserscanner 11, 12, 13, 14 sind insbesondere dazu ausgebildet, Hindernisse in der jeweiligen Scanebene zu erkennen. Die Laserscanner 11, 12, 13, 14 sind derart an dem Rahmen 20 angeordnet, dass die Scanebenen der Laserscanner 11, 12, 13, 14 parallel zu dem Boden 5 ausgerichtet sind, auf welchem das fahrerlose Transportfahrzeug 10 sich befindet. Die Scanebenen der Laserscanner 11, 12, 13, 14 weisen dabei einen gleichen Abstand zu dem Boden 5 auf und fallen somit zu einer gemeinsamen Scanebene zusammen.

Der erste Laserscanner 11 besitzt in der Scanebene ein erstes Sichtfeld S1, in welchem Hindernisse für den ersten Laserscanner 11 erkennbar sind. Der zweite Laserscanner 12 besitzt in der Scanebene ein zweites Sichtfeld S2, in welchem Hindernisse für den zweiten Laserscanner 12 erkennbar sind. Der dritte Laserscanner 13 besitzt in der Scanebene ein drittes Sichtfeld S3, in welchem Hindernisse für den dritten Laserscanner 13 erkennbar sind. Der vierte Laserscanner 14 besitzt in der Scanebene ein viertes Sichtfeld S4, in welchem Hindernisse für den vierten Laserscanner 14 erkennbar sind.

Das fahrerlose Transportfahrzeug 10 umfasst eine Hubeinrichtung zum Anheben eines unterfahrenen Ladungsträgers 50 relativ zu dem Rahmen 20. Die Hubeinrichtung weist dabei eine Hubplatte 32 zur Aufnahme eines unterfahrenen Ladungsträgers 50 auf. Die Hubplatte 32 ist relativ zu dem Rahmen 20 in Vertikalrichtung Z beweglich. In der hier gezeigten Darstellung befindet sich ein Ladungsträger 50 auf dem fahrerlosen Transportfahrzeug 10.

Der Ladungsträger 50 ist vorliegend als Gestell ausgebildet und umfasst eine Transportfläche 58, welche sich rechtwinklig zu der Vertikalrichtung Z erstreckt. Die Transportfläche 58 dient zur Aufnahme von zu transportierenden Waren, beispielsweise Kisten oder Kartons. Die besagte Transportfläche 58 des Ladungsträgers 50 liegt auf der Hubplatte 32 des fahrerlosen Transportfahrzeug 10 auf. Es ist auch denkbar, dass der Ladungsträger 50 mehrere Transportflächen 58 aufweist, welche in Vertikalrichtung Z übereinander angeordnet sind.

Der als Gestell ausgebildete Ladungsträger 50 umfasst ferner vier Tragelemente 51. Die Tragelemente 51 sind unterhalb der besagten Transportfläche 58 angeordnet. Wenn der Ladungsträger 50 auf dem Boden 5 steht, so sind die Tragelemente 51 in Kontakt mit dem Boden 5. Die Tragelemente 51 sind vorliegend als drehbare Rollen ausgebildet. Die besagten Rollen sind dabei jeweils um eine Drehachse drehbar, welche rechtwinklig zu der Vertikalrichtung Z verläuft. Die besagten Rollen sind zusätzlich jeweils um eine Schwenkachse schwenkbar, welche in Vertikalrichtung Z verläuft. Die Drehachse und die Schwenkachse einer solche Rolle schneiden sich vorliegend nicht, sondern sind voneinander beabstandet.

Vorliegend ist der Ladungsträger 50 von der Hubeinrichtung des fahrerlosen Transportfahrzeugs 10 geringfügig angehoben. Die Tragelemente 51 sind somit von dem Boden 5 entfernt, ragen jedoch in die Scanebenen der Laserscanner 11, 12, 13, 14 hinein. Die Tragelemente 51 sind für die Laserstrahlen der Laserscanner 11, 12, 13, 14 undurchlässig. Durch eine Schwenkung um 360° um die jeweilige Schwenkachse definiert jede Rolle einen kreisförmigen, für die Laserscanner 11, 12, 13, 14 undurchsichtigen Bereich 55.

Die von den Tragelemente 51 des Ladungsträgers 50 gebildeten undurchsichtigen Bereiche 55 begrenzen jeweils die Sichtfelder S1, S2, S3, S4 der Laserscanner 11, 12, 13, 14. Die Sichtfelder S1, S2, S3, S4 sind dabei jeweils von zwei Begrenzungslinien B begrenzt, welche die undurchsichtigen Bereiche 55 tangieren. Je zwei Begrenzungslinien B von benachbarten Laserscannern 11, 12, 13, 14 schneiden sich jeweils in einem Kreuzungspunkt K. Die Kreuzungspunkte K befinden sich jeweils auf den Laserscannern 11, 12, 13, 14 abgewandten Seiten der undurchsichtigen Bereiche 55.

Jeweils zwei Sichtfelder S1, S2, S3, S4 von benachbarten Laserscannern 11, 12, 13, 14 überlappen sich in Abschnitten, die auf den Laserscannern 11, 12, 13, 14 abgewandten Seiten der Kreuzungspunkte K liegen. Zwischen je einem Kreuzungspunkt K und einem zugehörigen undurchsichtigen Bereich 55 ist ein verdeckter Bereich V gebildet. Die verdeckten Bereiche V befinden sich außerhalb der Sichtfelder S1, S2, S3, S4. Die Flächen der verdeckten Bereiche V sind dabei verhältnismäßig klein und weisen jeweils annähernd eine Form eines Dreiecks auf.

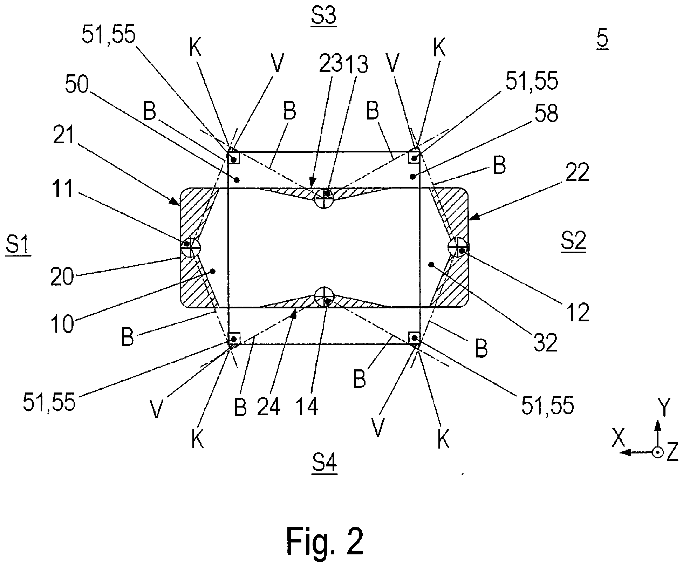

Figur 2 zeigt eine weitere semitransparente Draufsicht auf ein fahrerloses Transportfahrzeug 10 gemäß der ersten Ausführungsform mit einem Ladungsträger 50. Das fahrerlose Transportfahrzeug 10 ist dabei identisch zu dem in Figur 1 gezeigten fahrerlosen Transportfahrzeug 10 ausgebildet. In der hier gezeigten Darstellung befindet sich ein Ladungsträger 50 auf dem fahrerlosen Transportfahrzeug 10, welcher sich von dem in Figur 1 gezeigten Ladungsträger 50 unterscheidet.

Der als Gestell ausgebildete Ladungsträger 50 umfasst ebenfalls vier Tragelemente 51, die unterhalb der Transportfläche 58 angeordnet sind. Wenn der Ladungsträger 50 auf dem Boden 5 steht, so sind die Tragelemente 51 in Kontakt mit dem Boden 5. Die Tragelemente 51 sind vorliegend als feststehende Füße ausgebildet. Die Tragelemente 51 weisen einen annähernd quadratischen Querschnitt auf.

Vorliegend ist der Ladungsträger 50 von der Hubeinrichtung des fahrerlosen Transportfahrzeugs 10 geringfügig angehoben. Die Tragelemente 51 sind somit von dem Boden 5 entfernt, ragen jedoch in die Scanebenen der Laserscanner 11, 12, 13, 14 hinein. Die Tragelemente 51 sind für die Laserstrahlen der Laserscanner 11, 12, 13, 14 undurchlässig und definiert jeweils einen für die Laserscanner 11, 12, 13, 14 undurchsichtigen Bereich 55.

Die von den Tragelemente 51 des Ladungsträgers 50 gebildeten undurchsichtigen Bereiche 55 begrenzen jeweils die Sichtfelder S1, S2, S3, S4 der Laserscanner 11, 12, 13, 14. Die Sichtfelder S1, S2, S3, S4 sind dabei jeweils von zwei Begrenzungslinien B begrenzt, welche die undurchsichtigen Bereiche 55 tangieren. Je zwei Begrenzungslinien B von benachbarten Laserscannern 11, 12, 13, 14 schneiden sich jeweils in einem Kreuzungspunkt K. Die Kreuzungspunkte K befinden sich jeweils auf den Laserscannern 11, 12, 13, 14 abgewandten Seiten der undurchsichtigen Bereiche 55.

Jeweils zwei Sichtfelder S1, S2, S3, S4 von benachbarten Laserscannern 11, 12, 13, 14 überlappen sich in Abschnitten, die auf den Laserscannern 11, 12, 13, 14 abgewandten Seiten der Kreuzungspunkte K liegen. Zwischen je einem Kreuzungspunkt K und einem zugehörigen undurchsichtigen Bereich 55 ist ein verdeckter Bereich V gebildet. Die verdeckten Bereiche V befinden sich außerhalb der Sichtfelder S1, S2, S3, S4. Die Flächen der verdeckten Bereiche V sind dabei verhältnismäßig klein und weisen jeweils eine Form eines Dreiecks auf.

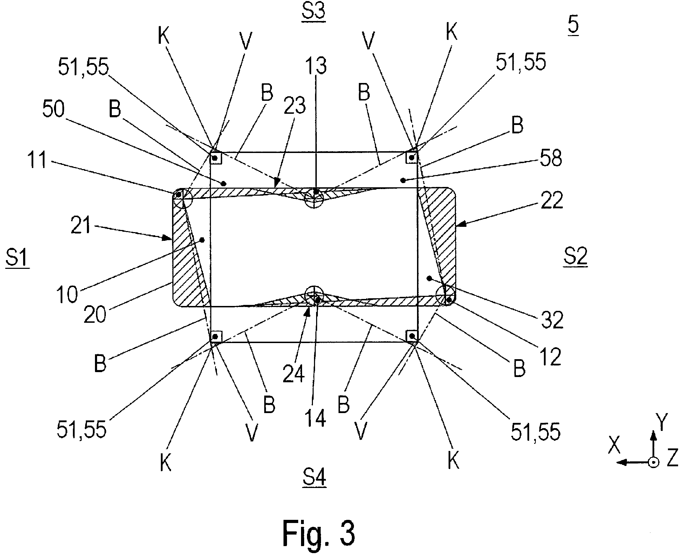

Figur 3 zeigt eine semitransparente Draufsicht auf ein fahrerloses Transportfahrzeug 10 gemäß einer zweiten Ausführungsform mit einem Ladungsträger 50. Das fahrerlose Transportfahrzeug 10 gemäß der zweiten Ausführungsform entspricht weitgehend dem in Figur 1 und in Figur 2 dargestellten fahrerlosen Transportfahrzeug 10 gemäß der ersten Ausführungsform. Das fahrerlose Transportfahrzeug 10 gemäß der zweiten Ausführungsform unterscheidet sich von dem fahrerlosen Transportfahrzeug 10 gemäß der ersten Ausführungsform in der Anordnung der Laserscanner 11, 12, 13, 14. Im Folgenden wird vorrangig auf diese Unterschiede eingegangen.

Das fahrerlose Transportfahrzeug 10 umfasst einen ersten Laserscanner 11, der in einem Eckbereich der Frontseite 21 und der ersten Längsseite 23 angeordnet ist. Das fahrerlose Transportfahrzeug 10 umfasst einen zweiten Laserscanner 12, der in einem Eckbereich der Heckseite 22 und der zweiten Längsseite 24 angeordnet ist. Das fahrerlose Transportfahrzeug 10 umfasst einen dritten Laserscanner 13, der in einem zentralen Bereich der rechten Längsseite 23 angeordnet ist. Das fahrerlose Transportfahrzeug 10 umfasst einen vierten Laserscanner 14, der in einem zentralen Bereich der linken Längsseite 24 angeordnet ist. Der erste Laserscanner 11 und der zweite Laserscanner 12 sind als in diagonal gegenüberliegenden Eckbereichen des Rahmens 20 angeordnet. Dabei werden der erste Laserscanner 11 und der zweite Laserscanner 12 für die Navigation des Transportfahrzeugs 10 genutzt.

Der hier dargestellte Ladungsträger 50 ist identisch zu dem in Figur 2 dargestellten Ladungsträger 50 ausgebildet und umfasst vier Tragelemente 51, die unterhalb der Transportfläche 58 angeordnet sind. Wenn der Ladungsträger 50 auf dem Boden 5 steht, so sind die Tragelemente 51 in Kontakt mit dem Boden 5. Die Tragelemente 51 sind dabei als feststehende Füße ausgebildet. Die Tragelemente 51 weisen einen annähernd quadratischen Querschnitt auf.

Vorliegend ist der Ladungsträger 50 von der Hubeinrichtung des fahrerlosen Transportfahrzeugs 10 geringfügig angehoben. Die Tragelemente 51 sind somit von dem Boden 5 entfernt, ragen jedoch in die Scanebenen der Laserscanner 11, 12, 13, 14 hinein. Die Tragelemente 51 sind für die Laserstrahlen der Laserscanner 11, 12, 13, 14 undurchlässig und definiert jeweils einen für die Laserscanner 11, 12, 13, 14 undurchsichtigen Bereich 55.

Die von den Tragelemente 51 des Ladungsträgers 50 gebildeten undurchsichtigen Bereiche 55 begrenzen jeweils die Sichtfelder S1, S2, S3, S4 der Laserscanner 11, 12, 13, 14. Die Sichtfelder S1, S2, S3, S4 sind dabei jeweils von zwei Begrenzungslinien B begrenzt, welche die undurchsichtigen Bereiche 55 tangieren. Je zwei Begrenzungslinien B von benachbarten Laserscannern 11, 12, 13, 14 schneiden sich jeweils in einem Kreuzungspunkt K. Die Kreuzungspunkte K befinden sich jeweils auf den Laserscannern 11, 12, 13, 14 abgewandten Seiten der undurchsichtigen Bereiche 55.

Jeweils zwei Sichtfelder S1, S2, S3, S4 von benachbarten Laserscannern 11, 12, 13, 14 überlappen sich in Abschnitten, die auf den Laserscannern 11, 12, 13, 14 abgewandten Seiten der Kreuzungspunkte K liegen. Zwischen je einem Kreuzungspunkt K und einem zugehörigen undurchsichtigen Bereich 55 ist ein verdeckter Bereich V gebildet. Die verdeckten Bereiche V befinden sich außerhalb der Sichtfelder S1, S2, S3, S4. Die Flächen der verdeckten Bereiche V sind dabei verhältnismäßig klein und weisen jeweils eine Form eines Dreiecks auf.

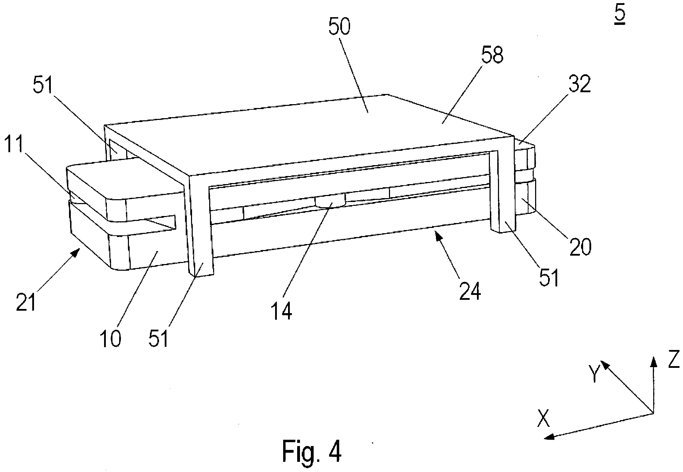

Figur 4 zeigt eine perspektivische Darstellung eines fahrerlosen Transportfahrzeugs 10 gemäß der zweiten Ausführungsform mit einem Ladungsträger 50. Das fahrerlose Transportfahrzeug 10 ist dabei identisch zu dem in Figur 3 gezeigten fahrerlosen Transportfahrzeug 10 ausgebildet. In der hier gezeigten Darstellung befindet sich ein Ladungsträger 50 auf dem fahrerlosen Transportfahrzeug 10, welcher identisch zu dem in Figur 3 dargestellten Ladungsträger 50 ausgebildet ist.

Das fahrerlose Transportfahrzeug 10 befindet sich auf einem ebenen Boden 5, welcher sich rechtwinklig zu der Vertikalrichtung Z erstreckt. Vorliegend ist der Ladungsträger 50 von der Hubeinrichtung des fahrerlosen Transportfahrzeugs 10 geringfügig angehoben. Die Tragelemente 51 sind somit von dem Boden 5 entfernt, ragen jedoch in die Scanebenen der Laserscanner 11, 12, 13, 14 hinein.

### Bezugszeichenliste

- 5: Boden
- 10: Fahrerloses Transportfahrzeug
- 11: erster Laserscanner
- 12: zweiter Laserscanner
- 13: dritter Laserscanner
- 14: vierter Laserscanner
- 20: Rahmen
- 21: Frontseite
- 22: Heckseite
- 23: rechte Längsseite
- 24: linke Längsseite
- 32: Hubplatte
- 50: Ladungsträger
- 51: Tragelement
- 55: undurchsichtiger Bereich
- 58: Transportfläche
- B: Begrenzungslinie
- K: Kreuzungspunkt
- S1: erstes Sichtfeld
- S2: zweites Sichtfeld
- S3: drittes Sichtfeld
- S4: viertes Sichtfeld
- V: verdeckter Bereich
- X: Längsrichtung
- Y: Querrichtung
- Z: Vertikalrichtung

## Patentansprüche

1. Fahrerloses Transportfahrzeug (10) zum Transport von Ladungsträgern (50), insbesondere Gestellen, welche von dem fahrerlosen Transportfahrzeug (10) unterfahrbar sind, umfassend einen Rahmen (20) mit einem zumindest annähernd rechteckigen Querschnitt mit einer Frontseite (21), einer der Frontseite (21) gegenüberliegenden Heckseite (22), einer rechten Längsseite (23) und einer der rechten Längsseite (23) gegenüberliegenden linken Längsseite (24), wobei
die Frontseite (21) und die Heckseite (22) in eine Querrichtung (Y) verlaufen, und
die Längsseiten (23, 24) in eine Längsrichtung (X) verlaufen,
eine Hubeinrichtung zum Anheben eines unterfahrenen Ladungsträgers (50) relativ zu dem Rahmen (20) und
mindestens einen Laserscanner (11, 12, 13, 14) zur Erkennung von Hindernissen,
wobei ein erster Laserscanner (11) an der Frontseite (21) angeordnet ist,
ein zweiter Laserscanner (12) an der Heckseite (22) angeordnet ist,
ein dritter Laserscanner (13) an der rechten Längsseite (23) angeordnet ist, und ein vierter Laserscanner (14) an der linken Längsseite (24) angeordnet ist, wobei alle vier Laserscanner (11, 12, 13, 14)für die Navigation des Transportfahrzeugs (10) genutzt werden,
**dadurch gekennzeichnet, dass**
die Hubeinrichtung eine Hubplatte (32) zur Aufnahme des unterfahrenen Ladungsträgers (50) aufweist, welche relativ zu dem Rahmen (20) in eine Vertikalrichtung (Z) beweglich ist, und dass der dritte Laserscanner (13) in einem zentralen Bereich der rechten Längsseite (23) angeordnet ist, und dass
der vierte Laserscanner (14) in einem zentralen Bereich der linken Längsseite (24) angeordnet ist.

2. Fahrerloses Transportfahrzeug (10) nach Anspruch 1, **dadurch gekennzeichnet, dass**
die Laserscanner (11, 12, 13, 14) dazu ausgebildet sind, Hindernisse in einer jeweiligen Scanebene zu erkennen, wobei
die Laserscanner (11, 12, 13, 14) derart an dem Rahmen (20) angeordnet sind, dass die Scanebenen der Laserscanner (11, 12, 13, 14) parallel zu einem Boden (5) ausgerichtet sind, auf welchem das fahrerlose Transportfahrzeug (10) sich befindet.

3. Fahrerloses Transportfahrzeug (10) nach Anspruch 2, **dadurch gekennzeichnet, dass**
die Laserscanner (11, 12, 13, 14) derart an dem Rahmen (20) angeordnet sind, dass die Scanebenen der Laserscanner (11, 12, 13, 14) in einer Vertikalrichtung (Z) einen gleichen Abstand zu dem Boden (5) aufweisen.

4. Fahrerloses Transportfahrzeug (10) nach einem der Ansprüche 2 bis 3,
**dadurch gekennzeichnet, dass**
der erste Laserscanner (11) in der Scanebene ein erstes Sichtfeld (S1) besitzt, und dass der zweite Laserscanner (12) in der Scanebene ein zweites Sichtfeld (S2) besitzt, und dass der dritte Laserscanner (13) in der Scanebene ein drittes Sichtfeld (S3) besitzt, und dass der vierte Laserscanner (14) in der Scanebene ein viertes Sichtfeld (S4) besitzt, und dass das erste Sichtfeld (S1) sowie das zweite Sichtfeld (S2) sich in der jeweiligen Scanebene über einen Winkelbereich von mindestens 200°, vorzugsweise von mindestens 230°, erstrecken.

5. Fahrerloses Transportfahrzeug (10) nach Anspruch 4, **dadurch gekennzeichnet, dass** die Laserscanner (11, 12, 13, 14) derart an dem Rahmen (20) angeordnet sind, dass das erste Sichtfeld (S1) und das dritte Sichtfeld (S3) sich in einem Abschnitt überlappen, welcher in Längsrichtung (X) teilweise zwischen der Frontseite (21) und der Heckseite (22) liegt, und/oder dass
das erste Sichtfeld (S1) und das vierte Sichtfeld (S4) sich in einem Abschnitt überlappen, welcher in Längsrichtung (X) teilweise zwischen der Frontseite (21) und der Heckseite (22) liegt, und/oder dass
das zweite Sichtfeld (S2) und das dritte Sichtfeld (S3) sich in einem Abschnitt überlappen, welcher in Längsrichtung (X) teilweise zwischen der Frontseite (21) und der Heckseite (22) liegt, und/oder dass
das zweite Sichtfeld (S2) und das vierte Sichtfeld (S4) sich in einem Abschnitt überlappen, welcher in Längsrichtung (X) teilweise zwischen der Frontseite (21) und der Heckseite (22) liegt.

6. Fahrerloses Transportfahrzeug (10) nach einem der vorangegangenen Ansprüche,
**dadurch gekennzeichnet, dass**
die Längsseiten (23, 24) länger als die Frontseite (21) und die Heckseite (22) sind, insbesondere mindestens doppelt so lang.

7. Fahrerloses Transportfahrzeug (10) nach einem der vorangegangenen Ansprüche,
**dadurch gekennzeichnet, dass**
der erste Laserscanner (11) in einem zentralen Bereich der Frontseite (21) angeordnet ist, und/oder dass
der zweite Laserscanner (12) in einem zentralen Bereich der Heckseite (22) angeordnet ist.

8. Fahrerloses Transportfahrzeug (10) nach einem der vorangegangenen Ansprüche,
**dadurch gekennzeichnet, dass**
der erste Laserscanner (11) in einem Eckbereich der Frontseite (21) und einer Längsseite (23, 24) angeordnet ist, und/oder dass
der zweite Laserscanner (12) in einem Eckbereich der Heckseite (22) und einer Längsseite (23, 24) angeordnet ist.

9. Fahrerloses Transportfahrzeug (10) nach einem der vorangegangenen Ansprüche, **dadurch gekennzeichnet, dass**
die Hubpiatte (32) eine Zentriervorrichtung zum Zentrieren eines unterfahrenen Ladungsträgers (50) aufweist.

10. Fahrerloses Transportfahrzeug (10) nach einem der vorangegangenen Ansprüche,
**dadurch gekennzeichnet, dass**
das fahrerlose Transportfahrzeug (10) eine Sicherheitssteuerung umfasst, welche dazu eingerichtet ist, eine Warnmeldung zu generieren, wenn mindestens ein Laserscanner (11, 12, 13, 14) ein Hindernis in einem Sichtfeld (S1, S2, S3, S4) erkennt.

11. Fahrerloses Transportfahrzeug (10) nach einem der vorangegangenen Ansprüche,
**dadurch gekennzeichnet, dass**
das fahrerlose Transportfahrzeug (10) eine Antriebseinrichtung, einen elektrischen Energiespeicher zur Versorgung der Antriebseinrichtung sowie eine Steuereinheit zur Steuerung der Antriebseinrichtung umfasst.

12. Fahrerloses Transportfahrzeug (10) nach einem der vorangegangenen Ansprüche,
**dadurch gekennzeichnet, dass**
das fahrerlose Transportfahrzeug (10) einen Positionssensor zur Erfassung einer Position des fahrerlosen Transportfahrzeugs (10) umfasst.

13. Verfahren zum Betreiben eines fahrerlosen Transportfahrzeugs (10) nach einem der vorangegangenen Ansprüche,
**dadurch gekennzeichnet, dass**
ein zu transportierender Ladungsträger (50), insbesondere ein Gestell, von dem fahrerlosen Transportfahrzeug (10) unterfahren wird;
der unterfahrene Ladungsträger (50) von der Hubeinrichtung relativ zu dem Rahmen (20) angehoben wird; und
ein Transport des Ladungsträgers (50) durchgeführt wird,
während mindestens ein Tragelement (51) des Ladungsträgers (50) in eine Scanebene der Laserscanner (11, 12, 13, 14) hineinragt.

## Claims

1. A driverless transport vehicle (10) for transporting load carriers (50), in particular frames, under which the driverless transport vehicle (10) can drive, comprising a frame (20), with an at least substantially rectangular cross-section with a front side (21), a rear side (22) opposite the front side (21), a right-hand long side (23) and a left-hand long side (24) opposite the right-hand long side (23), wherein the front side (21) and the rear side (22) run in a transverse direction (Y) and the long sides (23, 24) run in a longitudinal direction (X), a lifting device for raising a driven-under load carrier (50) relative to the frame (20) and at least one laser scanner (11, 12, 13, 14) for identifying obstacles, wherein a first laser scanner (11) is arranged at the front side (21), a second laser scanner (12) is arranged at the rear side (22), a third laser scanner (13) is arranged at the right-hand long side (23) and a fourth laser scanner (14) is arranged at the left-hand long side (24), wherein all four laser scanners (11, 12, 13, 14) are used for the navigation of the transport vehicle (10),
**characterised in that**
the lifting device has a lifting plate (32) for receiving the driven-under load carrier (50), which lifting plate is movable in a vertical direction (Z) relative to the frame (20), and **in that** the third laser scanner (13) is arranged in a central region of the right-hand long side (23), and **in that** the fourth laser scanner (14) is arranged in a central region of the left-hand long side (24).

2. A driverless transport vehicle (10) according to claim 1, **characterised in that**
the laser scanners (11, 12, 13, 14) are designed to identify obstacles in a respective scanning plane, wherein the laser scanners (11, 12, 13, 14) are arranged on the frame (20) such that the scanning planes of the laser scanners (11, 12, 13, 14) are oriented parallel to ground (5) on which the driverless transport vehicle (10) is located.

3. A driverless transport vehicle (10) according to claim 2, **characterised in that**
the laser scanners (11, 12, 13, 14) are arranged on the frame (20) such that the scanning planes of the laser scanners (11, 12, 13, 14) are at the same distance from the ground (5) in a vertical direction (Z).

4. A driverless transport vehicle (10) according to one of claims 2 to 3,
**characterised in that**
the first laser scanner (11) has a first field of view (S1) in the scanning plane, and **in that** the second laser scanner (12) has a second field of view (S2) in the scanning plane, and **in that** the third laser scanner (13) has a third field of view (S3) in the scanning plane, and **in that** the fourth laser scanner (14) has a fourth field of view (S4) in the scanning plane, and **in that** the first field of view (S1) and the second field of view (S2) extend in the respective scanning plane over an angular range of at least 200°, preferably at least 230°.

5. A driverless transport vehicle (10) according to claim 4, **characterised in that**
the laser scanners (11, 12, 13, 14) are arranged on the frame (20) such that the first field of view (S1) and the third field of view (S3) overlap in a portion which in a longitudinal direction (X) lies partially between the front side (21) and the rear side (22),
and/or **in that**
the first field of view (S1) and the fourth field of view (S4) overlap in a portion which in a longitudinal direction (X) lies partially between the front side (21) and the rear side (22),
and/or **in that**
the second field of view (S2) and the third field of view (S3) overlap in a portion which in a longitudinal direction (X) lies partially between the front side (21) and the rear side (22),
and/or **in that**
the second field of view (S2) and the fourth field of view (S4) overlap in a portion which in a longitudinal direction (X) lies partially between the front side (21) and the rear side (22).

6. A driverless transport vehicle (10) according to any one of the preceding claims,
**characterised in that**
the long sides (23, 24) are longer than the front side (21) and the rear side (22), in particular at least twice as long.

7. A driverless transport vehicle (10) according to any one of the preceding claims,
**characterised in that**
the first laser scanner (11) is arranged in a central region of the front side (21), and/or **in that**
the second laser scanner (12) is arranged in a central region of the rear side (22).

8. A driverless transport vehicle (10) according to any one of the preceding claims,
**characterised in that**
the first laser scanner (11) is arranged in a corner region of the front side (21) and a long side (23, 24), and/or **in that**
the second laser scanner (12) is arranged in a corner region of the rear side (22) and a long side (23, 24).

9. A driverless transport vehicle (10) according to any one of the preceding claims,
**characterised in that**
the lifting plate (32) has a centring device for centring a driven-under load carrier (50).

10. A driverless transport vehicle (10) according to any one of the preceding claims,
**characterised in that**
the driverless transport vehicle (10) comprises a safety control means which is configured to generate a warning when at least one laser scanner (11, 12, 13, 14) identifies an obstacle in a field of view (S1, S2, S3, S4).

11. A driverless transport vehicle (10) according to any one of the preceding claims,
**characterised in that**
the driverless transport vehicle (10) comprises a drive arrangement, an electrical energy store to supply the drive arrangement and a control unit to control the drive arrangement.

12. A driverless transport vehicle (10) according to any one of the preceding claims,
**characterised in that**
the driverless transport vehicle (10) comprises a position sensor to identify a position of the driverless transport vehicle (10).

13. A method of operating a driverless transport vehicle (10) according to any one of the preceding claims,
**characterised in that**
a load carrier (50) to be transported, in particular a frame, is driven under by the driverless transport vehicle (10);
the driven-under load carrier (50) is raised relative to the frame (20) by the lifting device; and
transport of the load carrier (50) is carried out, while at least one support element (51) of the load carrier (50) projects into a scanning plane of the laser scanners (11, 12, 12, 14).

## Revendications

1. Véhicule de transport sans conducteur (10) permettant le transport de supports de charge (50), en particulier de châssis, sous lesquels peut passer le véhicule de transport sans conducteur (10), comprenant un cadre (20) avec une section transversale au moins approximativement rectangulaire présentant une face avant (21), une face arrière (22) opposée à la face avant (21), une face longitudinale droite (23) et une face longitudinale gauche (24) opposée à la face longitudinale droite (23),
la face avant (21) et la face arrière (22) s'étendant dans une direction transversale (Y), et les faces longitudinales (23, 24) s'étendant dans une direction longitudinale (X),
un dispositif de levage permettant de soulever, par rapport au cadre (20), un support de charge (50) sous lequel est passé le véhicule de transport sans conducteur et
au moins un scanner laser (11, 12, 13, 14) permettant de détecter les obstacles,
un premier scanner laser (11) étant agencé au niveau de la face avant (21),
un deuxième scanner laser (12) étant agencé au niveau de la face arrière (22),
un troisième scanner laser (13) étant agencé au niveau de la face longitudinale droite (23), et
un quatrième scanner laser (14) étant agencé au niveau de la face longitudinale gauche (24),
les quatre scanners laser (11, 12, 13, 14) étant utilisés pour la navigation du véhicule de transport (10),
**caractérisé en ce que**
le dispositif de levage présente une plaque de levage (32) destinée à recevoir le support de charge (50) sous lequel est passé le véhicule de transport sans conducteur et pouvant être déplacée par rapport au cadre (20) dans une direction verticale (Z), et **en ce que** le troisième scanner laser (13) est agencé dans une région centrale de la face longitudinale droite (23), et **en ce que**
le quatrième scanner laser (14) est agencé dans une région centrale de la face longitudinale gauche (24).

2. Véhicule de transport sans conducteur (10) selon la revendication 1, **caractérisé en ce que**
les scanners laser (11, 12, 13, 14) sont conçus pour détecter les obstacles dans un plan de balayage respectif,
les scanners laser (11, 12, 13, 14) étant agencés sur le cadre (20) de telle manière que les plans de balayage des scanners laser (11, 12, 13, 14) sont alignés parallèlement à un sol (5) sur lequel se trouve le véhicule de transport sans conducteur (10).

3. Véhicule de transport sans conducteur (10) selon la revendication 2, **caractérisé en ce que**
les scanners laser (11, 12, 13, 14) sont agencés sur le cadre (20) de telle manière que les plans de balayage des scanners laser (11, 12, 13, 14) sont à une même distance du sol (5) dans une direction verticale (Z).

4. Véhicule de transport sans conducteur (10) selon l'une quelconque des revendications 2 à 3, **caractérisé en ce que**
le premier scanner laser (11) possède un premier champ de vision (S1) dans le plan de balayage, et **en ce que**
le deuxième scanner laser (12) possède un deuxième champ de vision (S2) dans le plan de balayage, et **en ce que**
le troisième scanner laser (13) possède un troisième champ de vision (S3) dans le plan de balayage, et **en ce que**
le quatrième scanner laser (14) possède un quatrième champ de vision (S4) dans le plan de balayage, et **en ce que**
le premier champ de vision (S1) et le deuxième champ de vision (S2) s'étendent dans le plan de balayage respectif sur une plage angulaire d'au moins 200°, de manière préférée d'au moins 230°.

5. Véhicule de transport sans conducteur (10) selon la revendication 4, **caractérisé en ce que**
les scanners laser (11, 12, 13, 14) sont agencés sur le cadre (20) de telle manière que le premier champ de vision (S1) et le troisième champ de vision (S3) se chevauchent dans une section qui se trouve partiellement entre la face avant (21) et la face arrière (22) dans la direction longitudinale (X), et/ou **en ce que**
le premier champ de vision (S1) et le quatrième champ de vision (S4) se chevauchent dans une section qui se trouve partiellement entre la face avant (21) et la face arrière (22) dans la direction longitudinale (X), et/ou **en ce que**
le deuxième champ de vision (S2) et le troisième champ de vision (S3) se chevauchent dans une section qui se trouve partiellement entre la face avant (21) et la face arrière (22) dans la direction longitudinale (X), et/ou **en ce que**
le deuxième champ de vision (S2) et le quatrième champ de vision (S4) se chevauchent dans une section qui se trouve partiellement entre la face avant (21) et la face arrière (22) dans la direction longitudinale (X).

6. Véhicule de transport sans conducteur (10) selon l'une quelconque des revendications précédentes, **caractérisé en ce que**
les face longitudinales (23, 24) sont plus longues, en particulier au moins deux fois plus longues, que la face avant (21) et la face arrière (22).

7. Véhicule de transport sans conducteur (10) selon l'une quelconque des revendications précédentes, **caractérisé en ce que**
le premier scanner laser (11) est agencé dans une région centrale de la face avant (21), et/ou **en ce que**
le deuxième scanner laser (12) est agencé dans une région centrale de la face arrière (22).

8. Véhicule de transport sans conducteur (10) selon l'une quelconque des revendications précédentes, **caractérisé en ce que**
le premier scanner laser (11) est agencé dans une région d'angle de la face avant (21) et d'une face longitudinale (23, 24), et/ou **en ce que**
le deuxième scanner laser (12) est agencé dans une région d'angle de la face arrière (22) et d'une face longitudinale (23, 24).

9. Véhicule de transport sans conducteur (10) selon l'une quelconque des revendications précédentes, **caractérisé en ce que**
la plaque de levage (32) présente un dispositif de centrage permettant de centrer un support de charge (50) sous lequel est passé le véhicule de transport sans conducteur.

10. Véhicule de transport sans conducteur (10) selon l'une quelconque des revendications précédentes, **caractérisé en ce que**
le véhicule de transport sans conducteur (10) comprend une commande de sécurité conçue pour générer un message d'avertissement lorsqu'au moins un scanner laser (11, 12, 13, 14) détecte un obstacle dans un champ de vision (S1, S2, S3, S4).

11. Véhicule de transport sans conducteur (10) selon l'une quelconque des revendications précédentes, **caractérisé en ce que**
le véhicule de transport sans conducteur (10) comprend un dispositif d'entraînement, un accumulateur d'énergie électrique permettant d'alimenter le dispositif d'entraînement et une unité de commande permettant de commander le dispositif d'entraînement.

12. Véhicule de transport sans conducteur (10) selon l'une quelconque des revendications précédentes, **caractérisé en ce que**
le véhicule de transport sans conducteur (10) comprend un capteur de position permettant de détecter une position du véhicule de transport sans conducteur (10).

13. Procédé de fonctionnement d'un véhicule de transport sans conducteur (10) selon l'une quelconque des revendications précédentes, **caractérisé en ce que**
le véhicule de transport sans conducteur (10) passe sous un support de charge (50) à transporter, en particulier un châssis ;
le support de charge (50) sous lequel est passé le véhicule de transport sans conducteur est soulevé par le dispositif de levage par rapport au cadre (20) ; et
le transport du support de charge (50) est effectué,
tandis qu'au moins un élément porteur (51) du support de charge (50) pénètre dans un plan de balayage des scanners laser (11, 12, 13, 14).
